# EUROPEAN PATENT SPECIFICATION

(11) **EP 3 941 127 B1**
(45) Date of publication and mention of the grant of the patent: **21.05.2025**
(21) Application number: 19919471.3
(22) Date of filing: 14.03.2019
(51) Int. Cl.: H04W 72/04, H04W 16/28, H04L 5/00

(54) **TERMINAL, RADIO COMMUNICATION METHOD, BASE STATION AND SYSTEM**
ENDGERÄT, FUNKKOMMUNIKATIONSVERFAHREN, BASISSTATION UND SYSTEM
TERMINAL, PROCÉDÉ DE COMMUNICATION RADIO, STATION DE BASE, SYSTÈME

(43) Date of publication of application: 19.01.2022
(73) Proprietor: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/010626
(87) International publication number: WO 2020/183721

(56) References cited:
- EP-A1- 3 567 783
- WO-A1-2018/128376
- ZTE: "Additional details of latency and overhead reduction for beam management", vol. RAN WG1, no. Taipei; 20190121 - 20190125, 12 January 2019 (2019-01-12), XP051575719, Retrieved from the Internet <URL:http://www.3gpp.org/ftp/tsg%5Fran/WG1%5FRL1/TSGR1%5FAH/NR%5FAH%5F1901/Docs/R1%2D1900093%2Ezip> [retrieved on 20190112]
- LG ELECTRONICS: "Feature lead summary of Enhancements on Multi-beam Operations", 3GPP TSG RAN WG1 MEETING #96 R1-1903686, 3 March 2019 (2019-03-03), pages 3 . 2 - 3. 4, XP051690937
- NTT DOCOMO, INC.: "Discussion on multi-beam enhancement", 3GPP TSG RAN WG1 #96 R1-1902813, 15 February 2019 (2019-02-15), pages 4.4, XP051600508
- ZTE: "Additional details of latency and overhead reduction for beam management", 3GPP TSG RAN WG1 AD-HOC MEETING 1901 R1-1900093, 12 January 2019 (2019-01-12), XP051575719

## Description

### Technical Field

The present disclosure relates to a terminal, a radio communication method, a base station and a system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

LTE's successor systems (for example, also referred to as 5th generation mobile communication system (5G), 5G plus (+), New Radio (NR), or 3GPP Rel. 15 or later) have also been studied.

In an existing LTE system (for example, LTE Rel. 8 to 14), a user terminal (user equipment (UE)) controls transmission of an uplink shared channel (for example, physical uplink shared channel (PUSCH)) on the basis of downlink control information (DCI). Further, the UE controls transmission of uplink control information such as HARQ-ACK and CSI by using an uplink control channel (Physical Uplink Control Channel (PUCCH)).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

ZTE: "Additional details of latency and overhead reduction for beam management" (3GPP DRAFT; R1-1900093) describe the authors' following proposals for the latency and overhead reduction of beam with multi-beam operation: Proposal 1: Aperiodic beam measurement/reporting based on multiple resource sets should be considered for Rel-16 enhancement. Proposal 2: It should be supported that the default beam of PDSCH is different from the beam of CORESET. Proposal 3: Two TCI states can be configured for a CORESET. One is for PDCCH detection, another is for the default beam for PDSCH. Proposal 4: The TCI field in the DCI can be used to inform other information when the offset between DCI and corresponding PDSCH is less than the threshold. Proposal 5: Within one CSI-RS resource set, default configurations of some parameters for some CSI-RS resources can be supported, such as parameter qcl-InfoPeriodicCSI-RS, scramblingID and freqBand. Proposal 6: The PUCCH resources can be grouped based on beam, PUCCH resources within one group share the same beam. The MAC-CE is used to replace one old beam by a new beam for a PUCCH resource group associated with the old beam.

WO 2018/128376 Al describes a method for ransmitting/receiving an uplink channel in a wireless communication system, and a device therefor. A method for a terminal transmitting an uplink channel comprises the steps of: receiving a specific reference signal from a base station; determining the number of beams for transmitting an uplink control channel for reporting uplink control information generated on the basis of the CSI-RS; and transmitting the uplink control channel to the base station via a single beam or a plurality of beams according to the determined number of beams, wherein the number of beams may be determined on the basis of at least one among measurement information by a downlink reference signal received from the base station, or the type of the uplink control information.

### Summary of Invention

### Technical Problem

In a future radio communication system (for example, NR), it has been studied to specify, by control information (for example, a medium access control (MAC) control element (CE), downlink control information (DCI), or the like), one of a plurality of candidates set by higher layer signaling for a beam (spatial relation) of uplink (UL) transmission such as a PUCCH, a PUSCH, and an SRS.

On the other hand, when the number of candidates of the spatial relation that can be set increases, how to appropriately configure the spatial relation becomes a problem. In a case where the spatial relation cannot be appropriately configured, degradation of communication quality may occur.

Thus, an object of the present disclosure is to provide a user terminal and a radio communication method that appropriately control a spatial relation (for example, UL beam) applied to UL transmission.

### Solution to Problem

According to an aspect of the present invention, there is provided a terminal as set out in Claim 1.

According to another aspect of the present invention, there is provided a radio communication method as set out in Claim 4.

According to another aspect of the present invention, there is provided a base station as set out in Claim 5.

According to another aspect of the present invention, there is provided a system as set out in Claim 6.

### Advantageous Effects of Invention

According to one aspect of the present disclosure, it is possible to appropriately control a spatial relation (for example, UL beam) applied to UL transmission.

### Brief Description of Drawings

Fig. 1 is a diagram illustrating an example of a configuration of a PUCCH spatial relation information indication MAC CE.
Fig. 2 is a diagram illustrating an example of a number related to a PUCCH resource.
Fig. 3 is a diagram illustrating an example of a configuration of a PUCCH spatial relation information indication MAC CE according to a first aspect.
Fig. 4 is a diagram illustrating another example of the configuration of the PUCCH spatial relation information indication MAC CE according to the first aspect.
Fig. 5 is a diagram illustrating another example of the configuration of the PUCCH spatial relation information indication MAC CE according to the first aspect.
Fig. 6 is a diagram illustrating another example of the configuration of the PUCCH spatial relation information indication MAC CE according to the first aspect.
Fig. 7 is a diagram illustrating an example of a configuration of a PUCCH spatial relation information indication MAC CE according to a second aspect.
Fig. 8 is a diagram illustrating another example of the configuration of the PUCCH spatial relation information indication MAC CE according to the second aspect.
Fig. 9 is a diagram illustrating another example of the configuration of the PUCCH spatial relation information indication MAC CE according to the second aspect.
Fig. 10 is a diagram illustrating another example of the configuration of the PUCCH spatial relation information indication MAC CE according to the second aspect.
Fig. 11 is a diagram illustrating another example of the configuration of the PUCCH spatial relation information indication MAC CE according to the second aspect.
Fig. 12 is a diagram illustrating an example of a case where a PUCCH resource set is shared and applied by a plurality of TRPs.
Figs. 13A and 13B are diagrams illustrating an example of a PUCCH resource group according to a third aspect.
Figs. 14A and 14B are diagrams 14 illustrating another example of the PUCCH resource group according to the third aspect.
Fig. 15 is a diagram illustrating another example of the PUCCH resource group according to the third aspect.
Fig. 16 is a diagram illustrating an example of a configuration of a PUCCH spatial relation information indication MAC CE according to the third aspect.
Fig. 17 is a diagram illustrating an example of a schematic configuration of a radio communication system according to one embodiment.
Fig. 18 is a diagram illustrating an example of a configuration of a base station according to one embodiment.
Fig. 19 is a diagram illustrating an example of a configuration of a user terminal according to one embodiment.
Fig. 20 is a diagram illustrating an example of a hardware configuration of a base station and a user terminal according to one embodiment.

### Description of Embodiments

A user terminal disclosed herein includes: a receiving section that receives control information in which activation and deactivation of spatial relation information of an uplink control channel are set in common for a plurality of uplink control channel resource indexes; and a control section that controls transmission of an uplink control channel on the basis of the control information.

In NR, it has been studied to control reception processing (for example, at least one of reception, demapping, demodulation, and decoding) and transmission processing (for example, at least one of transmission, mapping, precoding, modulation, and coding) in a UE of at least one of a signal and a channel (expressed as a signal/channel) on the basis of a transmission configuration indication state (TCI state).

The TCI state may represent what is applied to a downlink signal/channel. One corresponding to the TCI state applied to an uplink signal/channel may be expressed as a spatial relation.

The UE may be configured to have a parameter (PUCCH configuration information, PUCCH-Config) necessary for uplink control channel (for example, PUCCH) transmission by higher layer signaling. The PUCCH configuration information may include a list of PUCCH resource set information (for example, PUCCH-ResourceSet) and a list of PUCCH spatial relation information (for example, PUCCH-SpatialRelateInfo).

The higher layer signaling may be, for example, any of radio resource control (RRC) signaling, medium access control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), other system information (OSI), or the like.

The PUCCH resource set information may include a list (for example, resourceList) of PUCCH resource indexes (IDs, for example, PUCCH-ResourceId).

Further, when the UE does not have individual PUCCH resource configuration information provided by the PUCCH resource set information in the PUCCH configuration information (before RRC setup), the UE may determine a PUCCH resource set on the basis of a higher layer parameter in system information (system information block type 1:
SIB1, RMSI).

The UE may determine a PUCCH resource index r_{PUCCH} on the basis of a PUCCH resource indicator field Δ_{PRI} in the DCI format 1_0 or 1_1, the number of CCEs N_{CCE}, ₀ in a control resource set (CORESET) of PDCCH reception carrying the DCI, an index n_{CCE}, ₀ of a head (first) CCE of the PDCCH reception, and the like.

On the other hand, when the UE has the individual PUCCH resource configuration information (after RRC setup), the UE may determine a PUCCH resource set index in accordance with the number of UCI information bits.

When the number of PUCCH resources in the PUCCH resource set determined is less than or equal to eight, the UE may determine the PUCCH resource index in accordance with a PUCCH resource indicator field in the DCI format 1_0 or 1_1.

When the number of PUCCH resources in the first PUCCH resource set (UCI) is greater than eight, the UE may determine the PUCCH resource index on the basis of a PUCCH resource indicator field Δ_{PRI} in the DCI format 1_0 or 1_1, a number of CCEs N_{CCE}, ₚ in a CORESET p of PDCCH reception carrying the DCI, and an index n_{CCE}, ₚ of the leading CCE of the PDCCH reception.

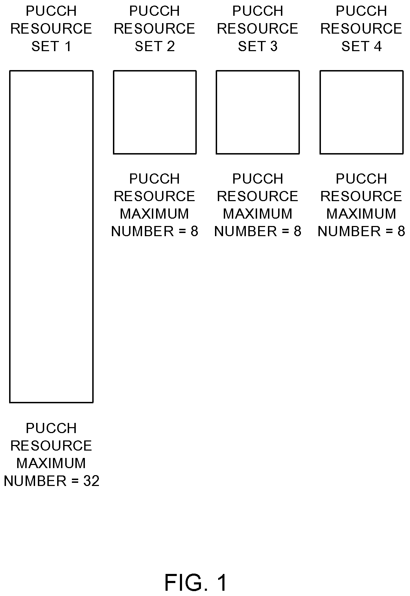

As illustrated in Fig. 1, for the PUCCH resource set information, a maximum number (for example, maxNrofPUCCH-ResourceSets) of PUCCH resource sets in each PUCCH resource set group may be a given value (for example, 4). A maximum number (for example, maxNrofPUCCH-ResourcePerSet) of PUCCH resources in each PUCCH resource set may be a given value (for example, 32). A maximum number of all PUCCH resources (for example, maxNrofPUCCH-Resources) may be a given value (for example, 128).

Further, the PUCCH spatial relation information may indicate a plurality of candidate beams (also referred to as spatial domain filters) for PUCCH transmission. The PUCCH spatial relation information may indicate a spatial association between a reference signal (RS) and a PUCCH.

The list of the PUSCH spatial relation information includes at least one entry (PUCCH spatial relation information, PUCCH spatial relation information element (IE)). Each piece of PUCCH spatial relation information may include a PUCCH spatial relation information index (ID, for example, pucch-SpatialRelationInfoId), a serving cell index (ID, for example, servingCellId), and an index of an RS. The index of the RS may be one of an SSB (synchronization signal (SS) block, SS/physical broadcast channel (PBCH) block) index, a Non-Zero Power (NZP)-CSI-RS resource configuration ID, and an SRS resource configuration ID. The SSB index, the NZP-CSI-RS resource configuration ID, and the SRS resource configuration ID may be associated with at least one of a beam, a resource, and a port selected by measurement of a corresponding RS.

At least one of a plurality of pieces of PUCCH spatial relation information (for example, PUCCH-SpatialRelateInfo, or candidate beam) in the list of the PUCCH spatial relation information may be indicated by a Medium Access Control (MAC) Control Element (CE).

The UE may receive a MAC CE (PUCCH spatial relation information activation/deactivation MAC CE, PUCCH spatial relation information indication MAC CE) that activates or deactivates the PUCCH spatial relation information.

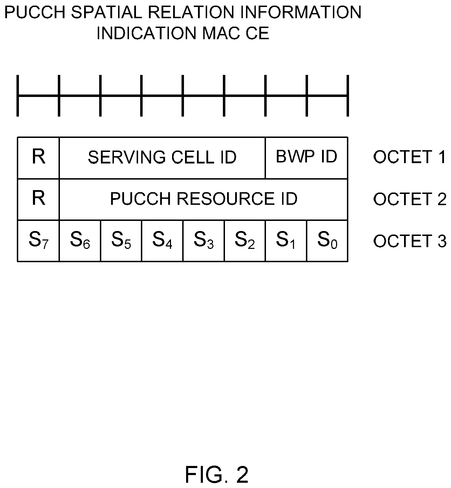

As illustrated in Fig. 2, the PUCCH spatial relation information indication MAC CE may include at least one of a reserved (R) field, a saving cell index (ID), a BWP index (ID), a PUCCH resource index (ID) field, and an Sᵢ field.

The PUCCH resource ID field is an identifier of a PUCCH resource ID (PUCCH-ResourceId) of which higher layer signaling notifies.

The Sᵢ field corresponds to an index of the spatial relation information to be set. A network (for example, a base station) sets a given number (here, eight) of pieces of spatial relation information (or spatial relation information candidates) in the UE by using higher layer signaling. The given number of pieces of spatial relation information are set for a plurality of PUCCH resources (or a PUCCH resource sets) set from the base station.

In a certain PUCCH resource ID, when the Sᵢ field is set to 1, PUCCH spatial relation information having a PUCCH spatial relation information index i is activated. On the other hand, when the Sᵢ field is set to 0, the PUCCH spatial relation information having the PUCCH spatial relation information index i is deactivated. That is, the Sᵢ field indicates whether or not to activate the PUCCH spatial relation information corresponding to each PUCCH resource ID.

As described above, it is supported to specify the PUCCH spatial relation information for each PUCCH resource ID by using MAC control information (for example, MAC CE). Further, for one PUCCH resource ID, only one piece of PUCCH spatial relation information may be active at a time.

Meanwhile, in the NR, it has been studied to extend the number of beams (the number of pieces of spatial relation information) used for UL transmission. For example, it is assumed that the number of beams used for the UL transmission is changed from 8 to 64. In such a case, when the number of beams (the number of pieces of spatial relation information) used for the UL transmission is extended, the number of beams of which notification can be made or that can be specified may be limited in a configuration of current control information (for example, MAC CE).

Further, when the number of beams of which notification can be made or that can be specified is increased and beams (or pieces of spatial relation information) to be activated/deactivated are specified separately for respective PUCCH resource IDs, there is a possibility that overhead of control information (for example, MAC CE) used for notification increases.

Thus, the present inventors have conceived control and the like of notification of a beam (for example, spatial relation information) and the like when the number of beams (the number of pieces of spatial relation information) used for UL transmission is extended.

Hereinafter, embodiments according to the present disclosure will be described in detail with reference to the drawings. Radio communication methods according to the respective embodiments may each be applied alone, or may be applied in combination. Note that in the following description, control information (for example, MAC CE) used for notification of spatial relation information of a PUCCH will be described as an example, but control information used for notification of spatial relation information or a TCI state of another signal may also be applied.

### (First Aspect)

In a first aspect, at least one of activation and deactivation (hereinafter, also referred to as activation/deactivation) of spatial relation information is set in common for a plurality of PUCCH resource IDs. In other words, the activation/deactivation of each spatial relation information ID for the plurality of PUCCH resource IDs is specified in common by using given control information (for example, MAC CE).

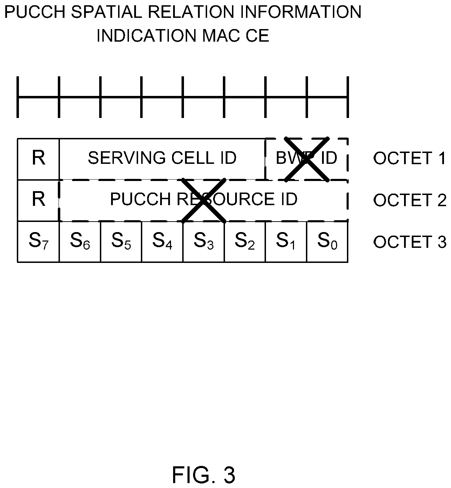

Fig. 3 illustrates an example of a MAC CE that specifies the activation/deactivation of the spatial relation information for all the PUCCH resources (or the PUCCH resource ID set in a given serving cell ID) included in a given serving cell (or CC). For example, "BWP ID" and "PUCCH resource ID" may be deleted from the MAC CE illustrated in Fig. 2.

Here, a case is illustrated where eight Sᵢ fields (S₀ to S₇) corresponding to respective pieces of spatial relation information are set; however, the number of Sᵢ fields is not limited thereto. A configuration may be made so that the number of beams (the number of pieces of spatial relation information) supported by the UE or the communication system can be specified. For example, a configuration to be described in a second aspect may be applied.

When the BWP ID is not included in the MAC CE indicating the activation/deactivation of the spatial relation information of the PUCCH, the UE may apply in common the spatial relation information to be activated/deactivated for a given serving cell ID to all the BWPs (and the PUCCH resource ID included in all the BWPs) included in the serving cell ID.

As described above, by setting (for example, activating/deactivating) in common the spatial relation information to the plurality of PUCCH resource IDs, it becomes unnecessary to set and perform notification of the spatial relation information for each PUCCH resource ID. Further, by setting (for example, activating/deactivating) in common the spatial relation information for a plurality of BWP IDs, it becomes unnecessary to set and perform notification of the spatial relation information for each BWP ID. As a result, it is possible to suppress an increase in overhead of the MAC CE.

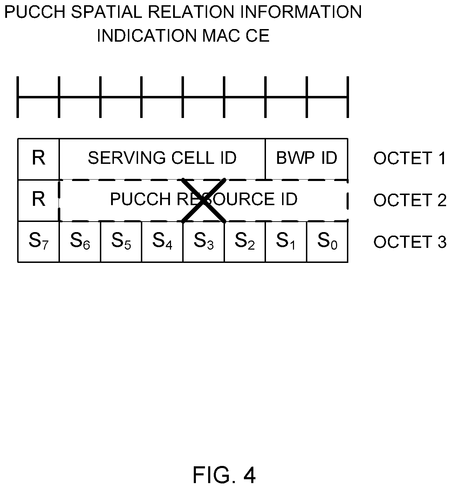

Fig. 4 illustrates an example of a MAC CE that specifies the activation/deactivation of the spatial relation information for all the PUCCH resources (or the PUCCH resource ID set in a given BWP ID) included in the given BWP ID of the given serving cell (or CC). For example, "PUCCH resource ID" may be deleted from the MAC CE illustrated in Fig. 2.

Here, a case is illustrated where eight Sᵢ fields (S₀ to S₇) corresponding to respective pieces of spatial relation information are set; however, the number of Sᵢ fields is not limited thereto. A configuration may be made so that the number of beams (the number of pieces of spatial relation information) supported by the UE or the communication system can be specified. For example, a configuration to be described in a second aspect may be applied.

When the PUCCH resource ID is not included in the MAC CE indicating the activation/deactivation of the spatial relation information of the PUCCH, the UE may apply the spatial relation information to be activated/deactivated for the given BWP ID of the given serving cell ID. That is, the UE may apply in common the spatial relation information to the PUCCH resource ID included in the BWP ID of the serving cell ID.

As described above, by setting (for example, activating/deactivating) in common the spatial relation information to the plurality of PUCCH resource IDs, it becomes unnecessary to set and perform notification of the spatial relation information for each PUCCH resource ID. As a result, it is possible to suppress an increase in overhead of the MAC CE.

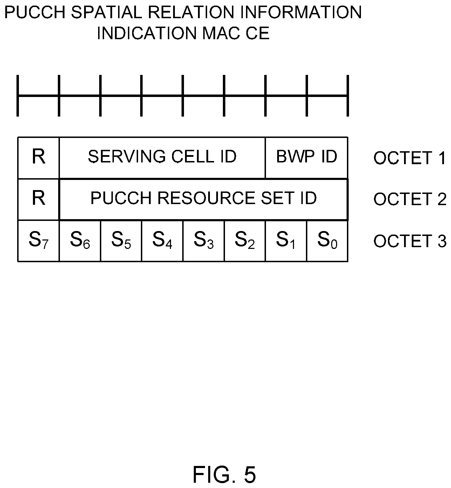

Fig. 5 illustrates an example of a MAC CE that specifies the activation/deactivation of the spatial relation information for all the PUCCH resources included in a given PUCCH resource set set in the given BWP ID of the given serving cell (or CC). For example, "PUCCH resource ID" in the MAC CE illustrated in Fig. 2 may be replaced with "PUCCH resource set ID".

When the PUCCH resource ID is replaced with the PUCCH resource set ID, the number of bits of the field may be determined in consideration of a maximum number of PUCCH resource set IDs (for example, four). For example, seven bits may be changed to two bits.

Alternatively, the number of bits of the field may be determined on the basis of the number of PUCCH resource sets set by higher layer signaling. For example, the field may be formed with one bit when the number of PUCCH resource sets set by higher layer signaling is two, and the field may be formed with two or more bits when the number of PUCCH resource sets is greater than two.

Here, a case is illustrated where eight Sᵢ fields (S₀ to S₇) corresponding to respective pieces of spatial relation information are set; however, the number of Sᵢ fields is not limited thereto. A configuration may be made so that the number of beams (the number of pieces of spatial relation information) supported by the UE or the communication system can be specified. For example, a configuration to be described in a second aspect may be applied.

When a PUCCH resource set is included instead of the PUCCH resource ID in the MAC CE indicating the activation/deactivation of the spatial relation information of the PUCCH, the UE may apply in common the spatial relation information specified by the MAC CE to the PUCCH resource ID included in the PUCCH resource set.

As described above, by setting (for example, activating/deactivating) in common the spatial relation information in units of PUCCH resource sets, it becomes unnecessary to set and perform notification of the spatial relation information for each PUCCH resource ID. As a result, it is possible to suppress an increase in overhead of the MAC CE.

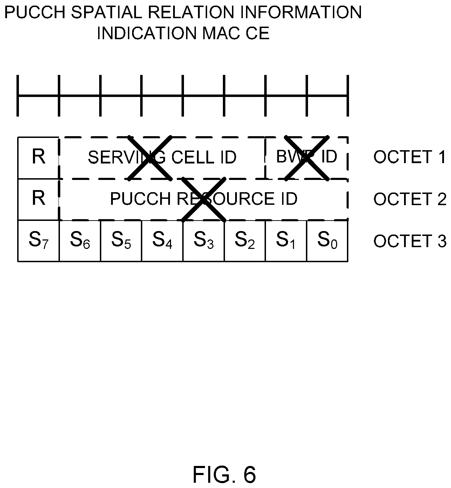

Fig. 6 illustrates an example of a MAC CE that specifies the activation/deactivation of the spatial relation information for all the PUCCH resources set in the UE. For example, "serving cell ID", "BWP ID," and "PUCCH resource ID" in the MAC CE illustrated in Fig. 2 may be deleted.

Here, a case is illustrated where eight Sᵢ fields (S₀ to S₇) corresponding to respective pieces of spatial relation information are set; however, the number of Sᵢ fields is not limited thereto. A configuration may be made so that the number of beams (the number of pieces of spatial relation information) supported by the UE or the communication system can be specified. For example, a configuration to be described in a second aspect may be applied.

The spatial relation information of the PUCCH may be applied in common to the PUCCH resource ID set in the UE. That is, the activation/deactivation of the spatial relation information of the PUCCH may be controlled in common for the PUCCH resource set in the UE regardless of the serving cell ID and the BWP ID.

As described above, by setting (for example, activating/deactivating) in common the spatial relation information to the plurality of PUCCH resource IDs, it becomes unnecessary to set and perform notification of the spatial relation information for each PUCCH resource ID. As a result, it is possible to suppress an increase in overhead of the MAC CE.

### (Second Aspect)

In the second aspect, a configuration will be described of a MAC CE that performs notification of the activation/deactivation of a given number (for example, 64) of pieces of spatial relation information. Note that in the following description, a case where a maximum number of pieces of spatial relation information of a PUCCH that can be set in a higher layer is set to 64 will be described as an example, but the maximum number is not limited thereto. Further, in the following description, the configuration described in the first aspect or the configuration of Fig. 2 may be applied to fields (serving cell ID, BWP ID, PCCH resource ID, and the like) other than the Sᵢ field in the MAC CE.

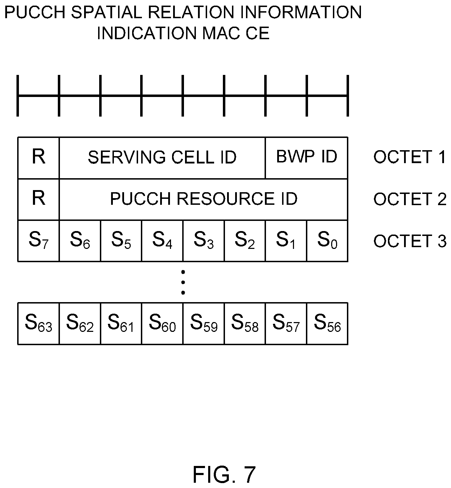

Fig. 7 illustrates a case where the number of bits of a given field (for example, also referred to as the Sᵢ field or an activation/deactivation field) set in the MAC CE is determined on the basis of the maximum number of pieces of spatial relation information that can be set. Here, a case is illustrated where the Sᵢ field configures 64 bits (for example, S₀ to S₆₃).

The base station may specify the activation/deactivation of each piece of spatial relation information to the UE in a bitmap format using the Sᵢ field.

Further, one or more spatial relation information IDs (or a plurality of Sᵢs) may be activated. In this case, it is sufficient that an Sᵢ corresponding to the spatial relation information ID to be activated is set to "1". By simultaneously activating a plurality of pieces of spatial relation information, it is possible to transmit a plurality of PUCCHs using different beams (or pieces of spatial relation information, spatial domain filters).

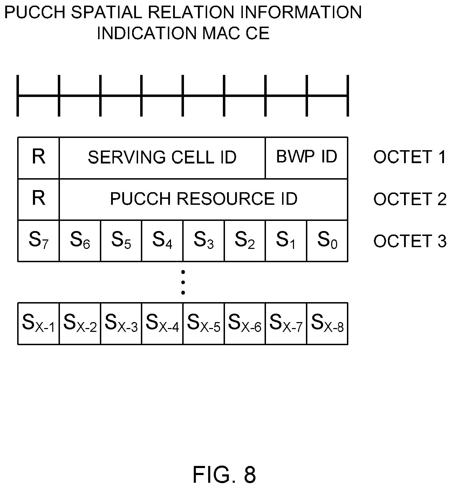

Fig. 8 illustrates a case where the number of bits of the Sᵢ field set in the MAC CE is determined on the basis of the number of pieces of spatial relation information set by higher layer signaling. Here, a case is illustrated where the Sᵢ field configures X bits (for example, S₀ to S_{X-1}). X may be any number of bits that can specify the number of pieces of spatial relation information set by higher layer signaling, and for example, when 16 pieces of spatial relation information are set by higher layer signaling, X = 16 may be set.

The base station may specify the activation/deactivation of each piece of spatial relation information to the UE in a bitmap format using the Sᵢ field.

Further, one or more spatial relation information IDs (or a plurality of Sᵢs) may be activated. In this case, it is sufficient that an Sᵢ corresponding to the spatial relation information ID to be activated is set to "1". By simultaneously activating a plurality of pieces of spatial relation information, it is possible to transmit a plurality of PUCCHs using different beams (or pieces of spatial relation information, spatial domain filters).

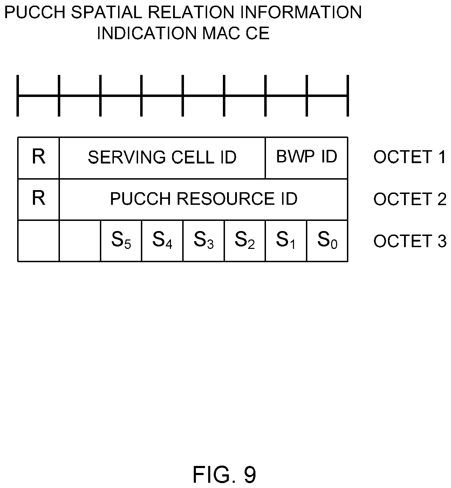

Fig. 9 illustrates a case where the number of bits of the Sᵢ field set in the MAC CE is determined on the basis of the maximum number of pieces of spatial relation information that can be set (for example, 64). Here, a case is illustrated where the Sᵢ field configures six bits (for example, S₀ to S₅) and one spatial relation information ID is specified. Note that the number of bits of the Sᵢ field is not limited thereto.

The UE activates one piece of spatial relation information specified by the Sᵢ field to control PUCCH transmission. Further, when second spatial relation information is activated by the MAC CE in a state in which there is already first spatial relation information in the active state, the UE may deactivate the first spatial relation information, and activate the second spatial relation information.

As described above, when one piece of spatial relation information is notified, it is possible to suppress an increase in overhead of the MAC CE by configuring the Sᵢ field without using the bitmap format.

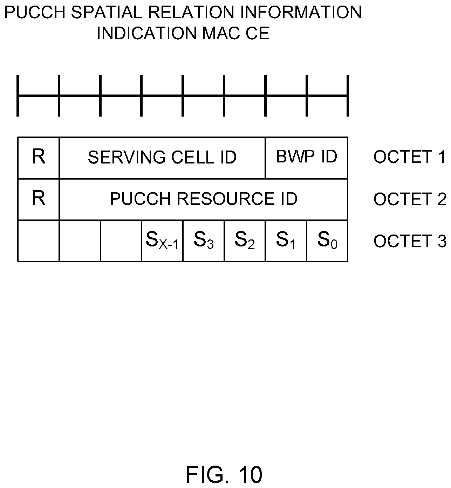

Fig. 10 illustrates a case where the number of bits of the Sᵢ field set in the MAC CE is determined on the basis of the number of pieces of spatial relation information set by higher layer signaling. Here, a case is illustrated where the Sᵢ field configures X bits (for example, S₀ to S_{X-1}) and one spatial relation information ID is specified. X may be any number of bits that can specify the number of pieces of spatial relation information set by higher layer signaling, and for example, when 16 pieces of spatial relation information are set by higher layer signaling, X = 4 may be set.

The UE activates one piece of spatial relation information specified by the Sᵢ field to control PUCCH transmission. Further, when second spatial relation information is activated by the MAC CE in a state in which there is already first spatial relation information in the active state, the UE may deactivate the first spatial relation information, and activate the second spatial relation information.

As described above, when one piece of spatial relation information is notified, it is possible to suppress an increase in overhead of the MAC CE by configuring the Sᵢ field without using the bitmap format.

### < Variations >

The number (one or a plurality) of spatial relation information that can be simultaneously activated may be switched and controlled by an instruction from the network. For example, one of a first configuration (Fig. 7 or Fig. 8) in which a plurality of pieces of spatial relation information can be simultaneously activated and a second configuration (Fig. 9 or Fig. 10) in which one piece of spatial relation information is activated may be set in the UE.

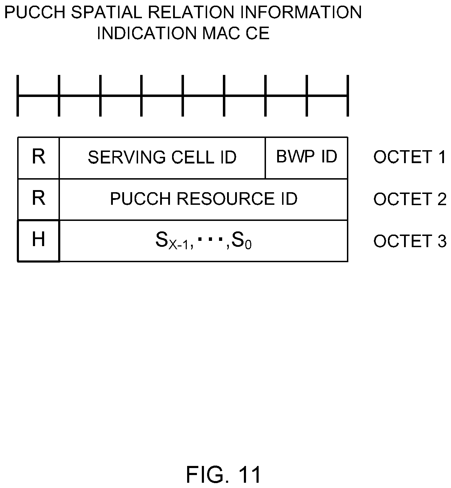

The base station may specify one of the first configuration and the second configuration by using a field (header bit field (H)) related to the Sᵢ field used to specify the spatial relation information (see Fig. 11). The field related to the Sᵢ field may be set before or after the Sᵢ field.

Alternatively, the base station may specify one of the first configuration and the second configuration by using an existing R field.

Alternatively, the UE may select one of the first configuration and the second configuration on the basis of presence or absence of application of simultaneous transmission of a UL channel (for example, at least one of PUCCH and PUSCH). For example, the UE may assume the first configuration when the application of the simultaneous transmission of the UL channel is set by higher layer signaling, and may assume the second configuration when the application of the simultaneous transmission of the UL channel is not set.

As described above, by switching and applying a plurality of configurations (for example, the first configuration and the second configuration) to the Sᵢ field of the MAC CE, the configuration (the number of bits of the Sᵢ field, and the like) of the MAC CE can be appropriately controlled on the basis of the presence or absence of the application of the simultaneous transmission of the UL channel.

The spatial relation information may be set for each BWP or for each cell (or CC). Alternatively, the spatial relation information may be set by PUCCH configuration information (for example, PUCCH-config), or may be set by the PUCCH resource set included in the PUCCH configuration information. Alternatively, the spatial relation information may be set by the PUCCH resource.

### (Third Aspect)

In a third aspect, a PUCCH resource group including one or a plurality of PUCCH resources is set, and spatial relation information is set in units of the PUCCH resource group.

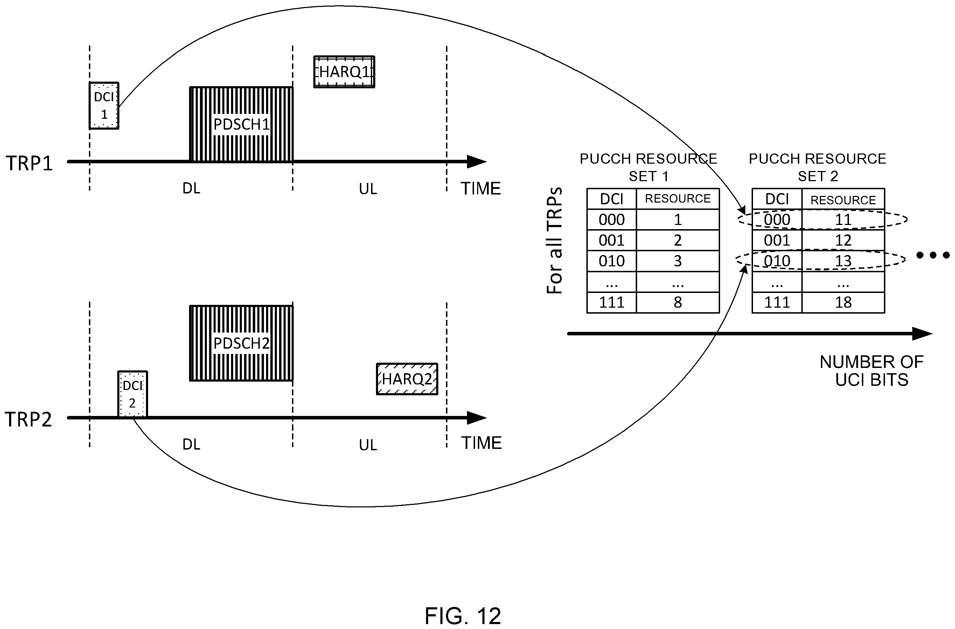

When uplink control information (for example, HARQ-ACK) is transmitted to each of a plurality of TRPs by using an uplink control channel, a case may occur in which setting of a different piece of spatial relation information is necessary for each PUCCH resource corresponding to each TRP. For example, when a given PUCCH resource set set in the UE is shared by a plurality of TRPs, it is desirable to set a different piece of spatial relation information for each PUCCH resource included in the PUCCH resource set (Fig. 12). Here, a case is illustrated where a PUCCH resource set 1 and a PUCCH resource set 2 are set in common for a plurality of TRPs.

Fig. 12 illustrates a case where a PUCCH resource used for transmission to the TRP 1 and a PUCCH resource used for transmission to the TRP 2 are selected from PUCCH resources included in the same PUCCH resource set 2. In this case, it is desirable that spatial relation information set in the PUCCH resource 1 used for transmission to the TRP 1 and spatial relation information set in the PUCCH resource 3 used for transmission to the TRP 1 are set separately.

However, when a different piece of spatial relation information is separately set for each PUCCH group, overhead of control information (for example, MAC CE) increases. For that reason, by setting a PUCCH resource group including one or a plurality of PUCCH resources and setting spatial relation information for each of the PUCCH resource groups, an increase in the overhead of control information is suppressed.

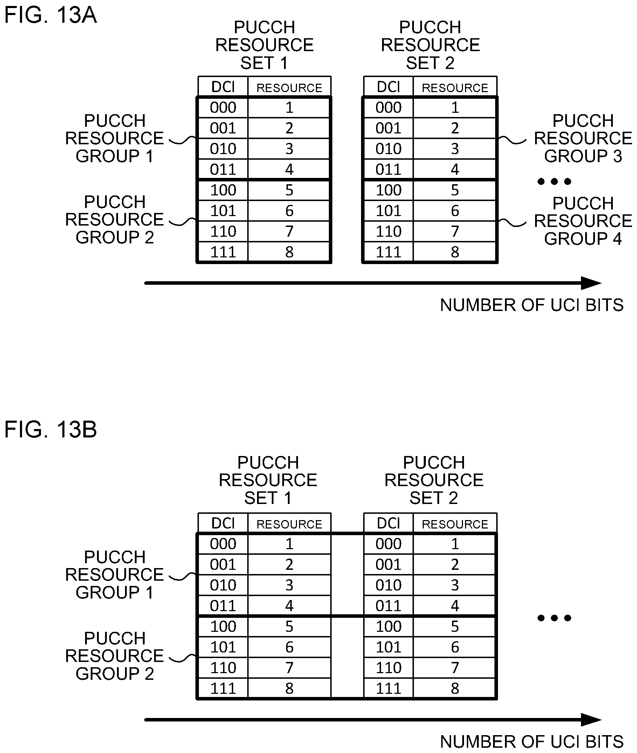

Fig. 13A illustrates an example of a case where a plurality of PUCCH groups is set in a PUCCH resource set. Specifically, a PUCCH resource group may be provided for DCI (PUCCH resource indicator field) of each PUCCH resource set. By setting the PUCCH resource group corresponding to the DCI, it is also possible to specify the spatial relation information simultaneously with selection of the PUCCH resource by using the DCI.

Fig. 13A illustrates a case where a PUCCH group 1 and a PUCCH group 2 are set in the PUCCH resource set 1, and a PUCCH group 3 and a PUCCH group 4 are set in the PUCCH resource set 2. Here, a case is illustrated where two PUCCH groups are formed in each PUCCH resource set; however, the number of PUCCH groups that can be set is not limited thereto.

A parameter (for example, the number of PUCCH groups, a PUCCH resource corresponding to each PUCCH group, or the like) of the PUCCH group set in each PUCCH resource set may be defined in a specification, or may be set in the UE from the base station with a higher layer parameter. Alternatively, the parameter may be determined on the basis of the number of PUCCH resources per PUCCH resource set.

Fig. 13A illustrates a case where different PUCCH resource groups are set for each PUCCH resource set, but a PUCCH resource group may be set in common for a plurality of PUCCH resource sets (see Fig. 13B). Fig. 13B illustrates a case where the PUCCH resource group 1 and the PUCCH group 2 are set in common in each of the PUCCH resource set 1 and the PUCCH resource set 2.

Further, for the PUCCH resources included in the same PUCCH resource set, a setting of the PUCCH resource group may be controlled on the basis of a bit value of the DCI. For example, the PUCCH resource group may be determined depending on whether the last bit of corresponding DCI is 0 or 1 (or a correspondence table of the DCI is odd-numbered rows or even-numbered rows).

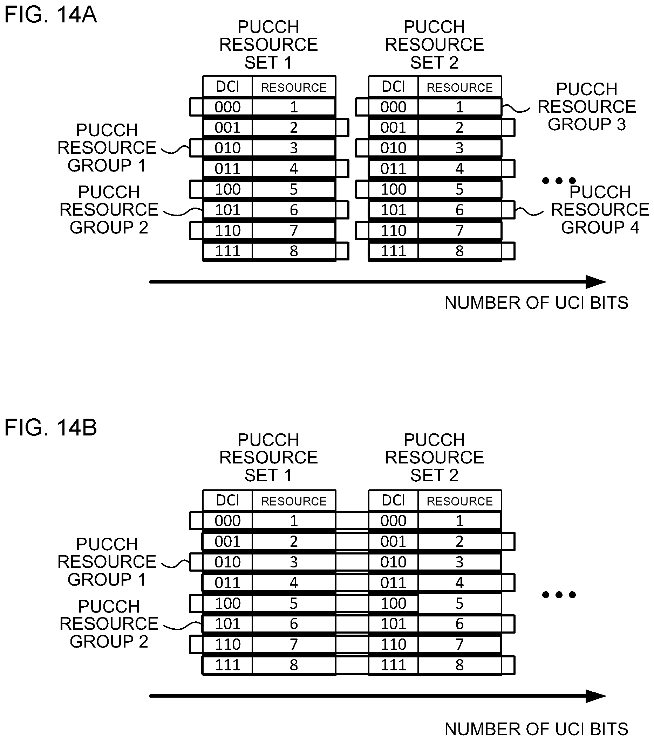

Fig. 14A illustrates a case where the PUCCH resource group 1 is associated when the last bit of corresponding DCI in the PUCCH resource set 1 is 0 (or the correspondence table of the DCI is odd-numbered rows). Further, a case is illustrated where the PUCCH resource group 2 is associated when the last bit of the corresponding DCI in the PUCCH resource set 1 is 1 (or the correspondence table of the DCI is even-numbered rows). The PUCCH resource groups 3 and 4 are set in a similar method also in the PUCCH resource set 2.

Fig. 14B illustrates a case where the PUCCH resource group 1 and the PUCCH group 2 are set in common in each of the PUCCH resource set 1 and the PUCCH resource set 2. Here, a case is illustrated where the PUCCH resource group 1 is associated when the last bit of corresponding DCI in the PUCCH resource sets 1 and 2 is 0 (or the correspondence table of the DCI is odd-numbered rows). Further, a case is illustrated where the PUCCH resource group 2 is associated when the last bit of the corresponding DCI in the PUCCH resource sets 1 and 2 is 1 (or the correspondence table of the DCI is even-numbered rows).

As a result, even when the number of PUCCH resources of each PUCCH resource set is smaller than eight, it is also possible to specify the spatial relation information simultaneously with selection of the PUCCH resource by using the DCI.

At least one of the base station and the UE may set or determine a PUCCH resource group corresponding to each PUCCH resource ID. For example, a group to which the PUCCH resource ID belongs may be determined depending on whether the PUCCH resource ID is an odd number or an even number. Alternatively, the base station may notify the UE of information regarding a corresponding group index as a part of the PUCCH resource by a higher layer parameter.

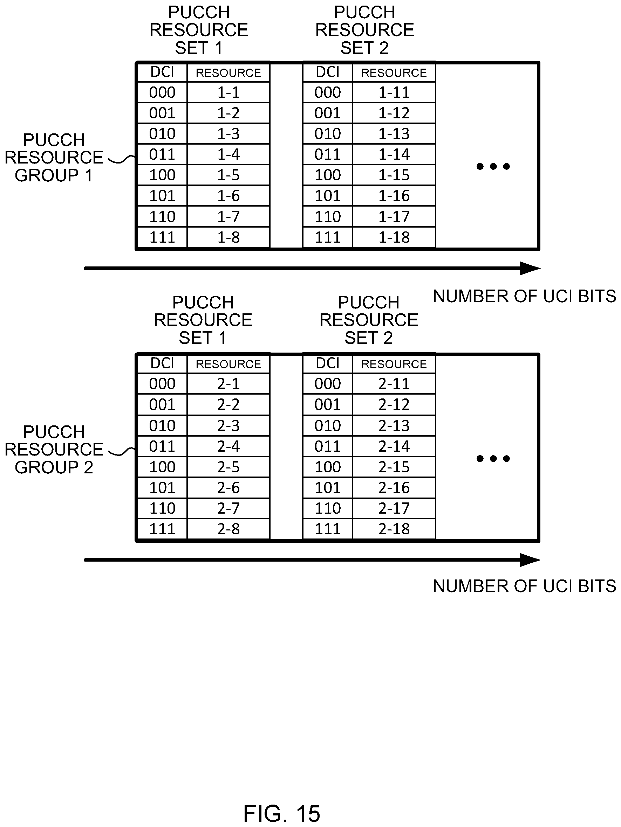

Alternatively, the PUCCH resource set may be set for the number of PUCCH resource groups. For example, when a given number (here, two) of the number of PUCCH resource groups are set, PUCCH resource sets corresponding to each number of PUCCH resource groups (here, two) may be set (see Fig. 15).

In Fig. 15, the PUCCH resource sets 1 and 2 are set for the PUCCH resource group 1, and the PUCCH resource sets 1 and 2 are set for the PUCCH resource group 2. Further, the PUCCH resources included in the PUCCH resource sets corresponding to different PUCCH resource groups may be common, or may be separately set.

Note that Fig. 15 illustrates a case where the number of groups is two; however, the number of groups is not limited thereto. The number of groups to be set may be specified in the specification, or may be set in the UE by using higher layer signaling or the like. Alternatively, the number of groups may be determined on the basis of the number of PUCCH resources per PUCCH resource set.

The base station may notify the UE of the group to be applied by the UE by using DCI or the like. Alternatively, the UE may determine the group to be applied on the basis of parameters (for example, at least one of a sequence ID, a CCE index, and a PRB index of a scheduled PDSCH) of a scheduled PDCCH.

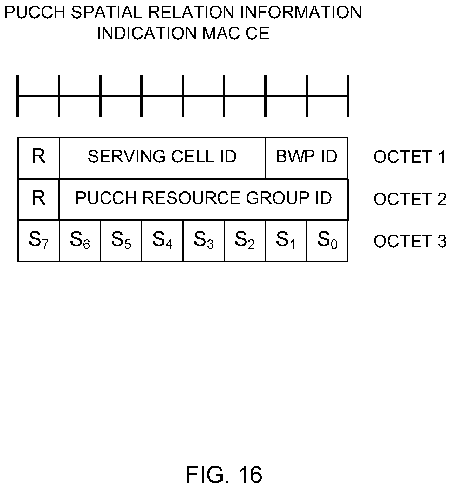

In this case, the spatial relation information may be set in common to the PUCCH resources included in the PUCCH resource group (see Fig. 16).

Fig. 16 illustrates an example of a MAC CE that specifies the activation/deactivation of the spatial relation information for all the PUCCH resources included in a given PUCCH resource group set in the given BWP ID of the given serving cell (or CC). For example, "PUCCH resource ID" in the MAC CE illustrated in Fig. 2 may be replaced with "PUCCH resource group ID".

When the PUCCH resource ID is replaced with the PUCCH resource group ID, the number of bits of the field may be determined in consideration of the number of PUCCH resource groups to be set. The number of PUCCH groups may be defined in the specification, or may be set by higher layer signaling. For example, the number of bits of the field may be determined on the basis of the maximum number of PUCCH resource groups that can be set in the specification or the number of PUCCH resource groups that is set by higher layer signaling.

Here, a case is illustrated where eight Sᵢ fields (S₀ to S₇) corresponding to respective pieces of spatial relation information are set; however, the number of Sᵢ fields is not limited thereto. A configuration may be made so that the number of beams (the number of pieces of spatial relation information) supported by the UE or the communication system can be specified.

When a PUCCH resource group is included instead of the PUCCH resource ID in the MAC CE indicating the activation/deactivation of the spatial relation information of the PUCCH, the UE may apply in common the spatial relation information specified by the MAC CE to the PUCCH resource ID included in the PUCCH resource group.

As described above, by setting (for example, activating/deactivating) in common the spatial relation information in units of PUCCH resource groups, it becomes unnecessary to set and perform notification of the spatial relation information for each PUCCH resource ID. As a result, it is possible to suppress an increase in overhead of the MAC CE.

### (Radio Communication System)

Hereinafter, a configuration will be described of a radio communication system according to one embodiment of the present disclosure. In this radio communication system, communication is performed using one or a combination of the radio communication methods according to the embodiments of the present disclosure.

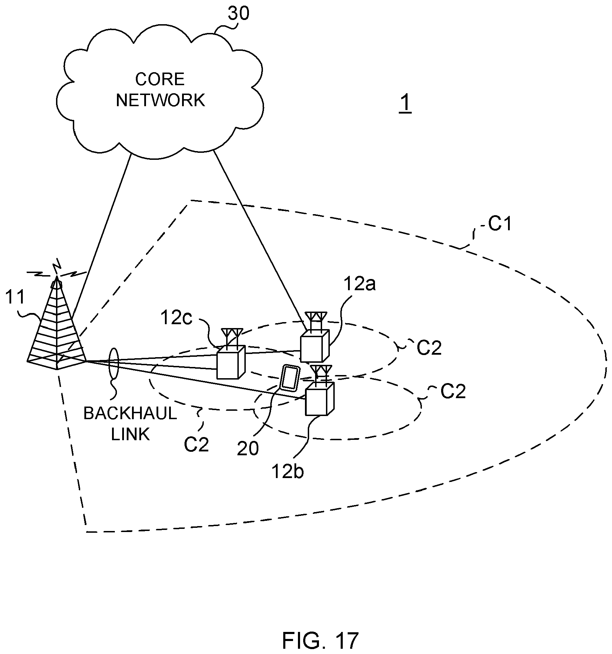

Fig. 17 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is a MN, and an LTE (E-UTRA) base station (eNB) is a SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged within the macro cell C1 and that form small cells C2 narrower than the macro cell C1. A user terminal 20 may be located in at least one cell. The arrangement, number, and the like of cells and the user terminals 20 are not limited to the aspects illustrated in the figure. Hereinafter, the base stations 11 and 12 will be collectively referred to as "base stations 10" when these are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) and a second frequency range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that the frequency ranges, definitions, and the like of the FR1 and FR2 are not limited thereto, and, for example, the FR1 may correspond to a frequency range higher than the FR2.

Further, the user terminal 20 may perform communication in each CC using at least one of time division duplex (TDD) and frequency division duplex (FDD).

The plurality of base stations 10 may be connected to each other by wire (for example, an optical fiber or an X2 interface in compliance with common public radio interface (CPRI)) or by radio (for example, NR communication). For example, when the NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), a next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by the user terminals 20, a physical broadcast channel (PBCH), a physical downlink control channel (PDCCH), or the like may be used.

Further, in the radio communication system 1, as an uplink channel, a physical uplink shared channel (PUSCH) shared by the user terminals 20, a physical uplink control channel (PUCCH), a physical random access channel (PRACH), or the like may be used.

The PDSCH transmits user data, higher layer control information, a system information block (SIB), and the like. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space on the basis of search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), and the like. Note that the SS, the SSB, or the like may also be referred to as a reference signal.

Further, in the radio communication system 1, the sounding reference signal (SRS), the demodulation reference signal (DMRS), and the like may be transmitted as an uplink reference signal (UL-RS). Note that the DMRS may be referred to as a "user terminal-specific reference signal (UE-specific Reference Signal)".

### (Base station)

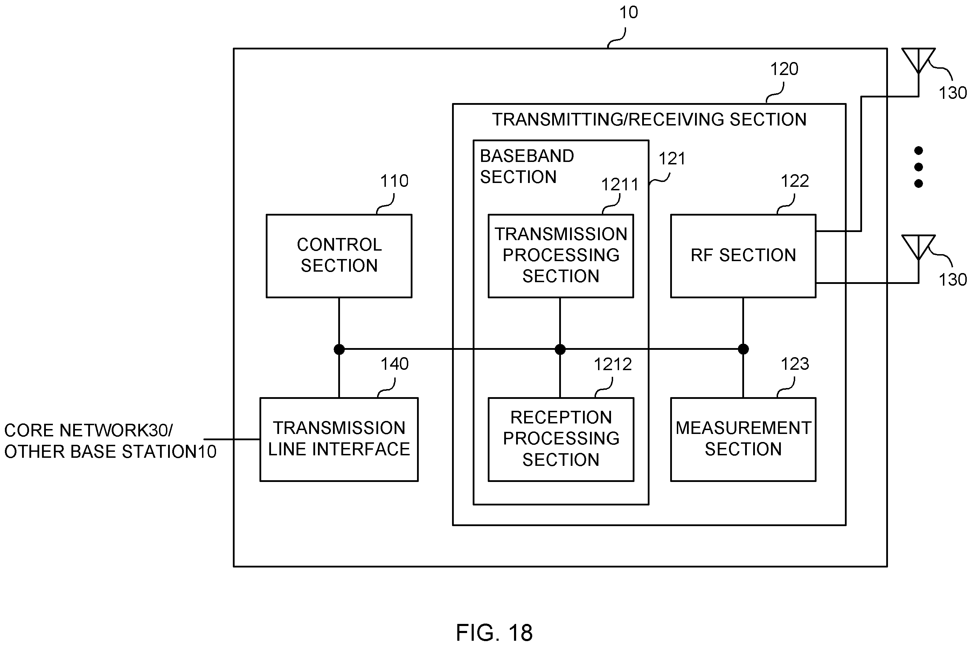

Fig. 18 is a diagram illustrating an example of a configuration of the base station according to one embodiment. The base station 10 includes a control section 110, a transmitting/receiving section 120, a transmission/reception antenna 130, and a transmission line interface 140. Note that one or more each of the control sections 110, the transmitting/receiving sections 120, the transmission/reception antennas 130, and the transmission line interfaces 140 may be included.

Note that this example mainly describes functional blocks of characteristic parts in the present embodiment, and it may be assumed that the base station 10 also has other functional blocks necessary for radio communication. A part of processing of each section described below may be omitted.

The control section 110 controls the entire base station 10. The control section 110 can configure a controller, a control circuit, and the like that are described on the basis of common recognition in the technical field related to the present disclosure.

The control section 110 may control signal generation, scheduling (for example, resource allocation, mapping), and the like. The control section 110 may control transmission/reception, measurement, and the like using the transmitting/receiving section 120, the transmission/reception antenna 130, and the transmission line interface 140. The control section 110 may generate data, control information, a sequence, and the like to be transmitted as signals, and may transfer the data, the control information, the sequence, and the like to the transmitting/receiving section 120. The control section 110 may perform call processing (such as configuration or release) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be formed as an integrated transmitting/receiving section, or may configure a transmitting section and a receiving section. The transmitting section may configure the transmission processing section 1211 and the RF section 122. The receiving section may configure the reception processing section 1212, the RF section 122, and the measurement section 123.

The transmission/reception antenna 130 can configure an antenna described on the basis of common recognition in the technical field related to the present disclosure, for example, an array antenna or the like.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, to transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception (backhaul signaling) of a signal to/from apparatuses, other base stations 10, and the like included in the core network 30, and may perform acquisition, transmission, and the like of user data (user plane data), control plane data, and the like for the user terminal 20.

Note that the transmitting section and the receiving section of the base station 10 in the present disclosure may configure at least one of the transmitting/receiving section 120, the transmission/reception antenna 130, and the transmission line interface 140.

Note that the transmitting/receiving section 120 transmits control information (for example, MAC CE) in which activation and deactivation of the spatial relation information of the uplink control channel are set in common for a plurality of uplink control channel resource indexes.

The control section 110 controls generation of control information (for example, MAC CE) so that activation and deactivation of the spatial relation information of the uplink control channel are set in common for the plurality of uplink control channel resource indexes.

### (User Terminal)

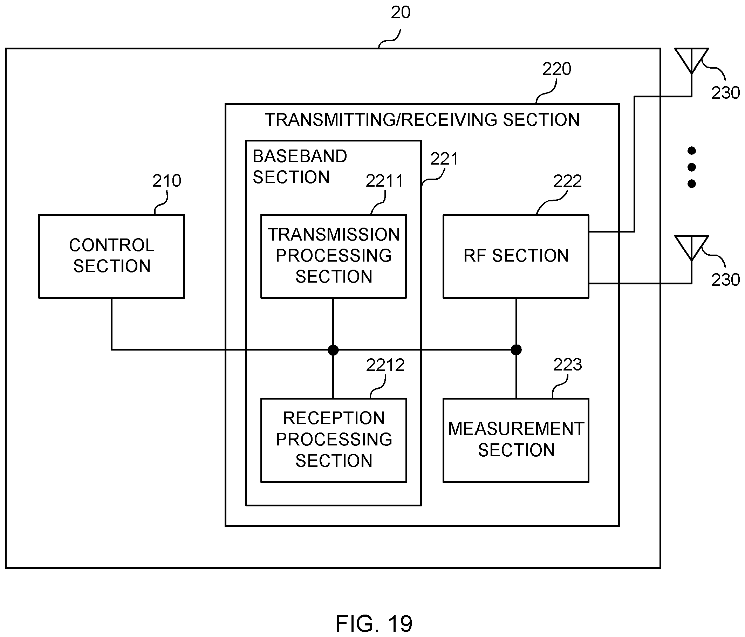

Fig. 19 is a diagram illustrating an example of a configuration of a user terminal according to one embodiment. The user terminal 20 includes a control section 210, a transmitting/receiving section 220, and a transmission/reception antenna 230. Note that one or more each of the control sections 210, the transmitting/receiving sections 220, and the transmission/reception antennas 230 may be included.

Note that this example mainly describes functional blocks of characteristic parts of the present embodiment, and it may be assumed that the user terminal 20 also has other functional blocks necessary for radio communication. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When it is not the case, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 and the transmission/reception antenna 230.

Note that the transmitting/receiving section 220 receives control information (for example, MAC CE) in which activation and deactivation of the spatial relation information of the uplink control channel are set in common for a plurality of uplink control channel resource indexes.

The control section 210 controls the transmission of the uplink control channel on the basis of control information in which activation and deactivation of the spatial relation information of the uplink control channel are set in common for the plurality of uplink control channel resource indexes.

The plurality of uplink control channel resource indexes may be set for the same cell, the same bandwidth part, or the same user terminal. Further, activation of the spatial relation information indexes of a plurality of uplink control channels may be allowed by the control information.

The control section 210 may determine the number of bits of a field included in the control information on the basis of spatial relation information of an uplink control channel set by higher layer signaling.

The plurality of uplink control channel resource indexes may be set in units of given uplink control channel resource groups.

### (Hardware Configuration)

Note that the block diagrams that have been used to describe the above embodiments illustrate blocks in functional units. These functional blocks (configuration sections) may be implemented in any combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (using wire, radio, or the like, for example) together and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration section) that causes transmission to function may be referred to as a transmitting unit, a transmitter, and the like. In any case, as described above, the implementation method is not particularly limited.

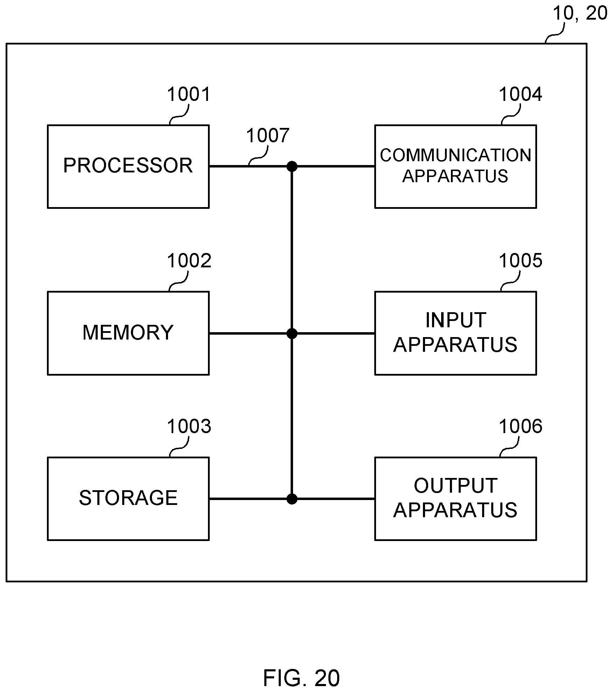

For example, the base station, the user terminal, and the like according to one embodiment of the present disclosure may function as a computer that executes the processing of the radio communication method of the present disclosure. Fig. 20 is a diagram illustrating an example of a hardware configuration of a base station and a user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may include one or a plurality of apparatuses illustrated in the figure, or does not have to include some apparatuses.

For example, although only one processor 1001 is illustrated, a plurality of processors may be provided. Further, the processing may be executed by one processor, or the processing may be executed by two or more processors simultaneously, sequentially, or using another method. Note that the processor 1001 may be implemented by one or more chips.

Each of functions of the base station 10 and the user terminal 20 is implemented by, for example, the processor 1001 executing an operation by reading given software (program) on hardware such as the processor 1001 or the memory 1002, controlling communication via the communication apparatus 1004, and controlling at least one of reading and writing of data in the memory 1002 and the storage 1003.

The processor 1001 may control the entire computer by, for example, causing an operating system to be operated. The processor 1001 may include a central processing unit (CPU) including an interface with peripheral equipment, a control device, an arithmetic device, a register, and the like. For example, at least a part of the above-described control section 110 (210), transmitting/receiving section 120 (220), and the like may be implemented by the processor 1001.

Further, the processor 1001 reads programs (program codes), software modules, or data, from at least one of the storage 1003 and the communication apparatus 1004, into the memory 1002, and executes various types of processing in accordance with these. As the program, a program to cause a computer to execute at least a part of the operation described in the above-described embodiment is used. For example, the control section 110 (210) may be implemented by a control program that is stored in the memory 1002 and operates in the processor 1001, and other functional blocks may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (main storage apparatus), or the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmission/reception device) for performing inter-computer communication through at least one of a wired network and a radio network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the above-described transmitting/receiving section 120 (220), transmitting/reception antenna 130 (230), and the like may be implemented by the communication apparatus 1004. In the transmitting/receiving section 120 (220), implementation may be made in which a transmitting section 120a (220a) and a receiving section 120b(220b) are separated from each other physically or logically.

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be provided in an integrated configuration (for example, a touch panel).

Further, these apparatuses such as the processor 1001 and the memory 1002 are connected to each other by the bus 1007 to communicate information. The bus 1007 may be formed with a single bus, or may be formed with different buses for respective connections between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented by at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. A reference signal can be abbreviated as an "RS", and may be referred to as a pilot, a pilot signal, and the like, depending on which standard applies. Further, a component carrier (CC) may be referred to as a cell, a frequency carrier, a carrier frequency, and the like.

A radio frame may include one or a plurality of periods (frames) in the time domain. Each of the one or plurality of periods (frames) constituting the radio frame may be referred to as a subframe. Furthermore, the subframe may include one or a plurality of slots in the time domain. The subframe may be a fixed time length (for example, 1 ms) that is not dependent on numerology.

Here, the numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, and a specific windowing processing performed by the transceiver in the time domain.

A slot may include one or a plurality of symbols in the time domain (orthogonal frequency division multiplexing (OFDM) symbols, single carrier frequency division multiple access (SC-FDMA) symbols, and the like). Further, the slot may be a time unit based on the numerology.

The slot may include a plurality of mini slots. Each mini slot may include one or a plurality of symbols in the time domain. Further, the mini slot may be referred to as a sub-slot. Each mini slot may include fewer symbols than the slot. A PDSCH (or PUSCH) transmitted in a time unit larger than a mini slot may be referred to as a PDSCH (PUSCH) mapping type A. A PDSCH (or PUSCH) transmitted using a mini slot may be referred to as a PDSCH (PUSCH) mapping type B.

The radio frame, subframe, slot, mini slot, and symbol all represent the time unit in signal communication. Other names may be used respectively corresponding to the radio frame, subframe, slot, mini slot, and symbol. Note that time units such as the frame, subframe, slot, mini slot, and symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe and TTI may be a subframe (1 ms) in the existing LTE, may be a period shorter than 1 ms (for example, one to thirteen symbols), or may be a period longer than 1 ms. Note that a unit to represent a TTI may be referred to as slot, mini slot, or the like, instead of subframe.

Here, the TTI refers to the minimum time unit of scheduling in radio communication, for example. For example, in the LTE system, a base station performs scheduling to allocate radio resources (a frequency bandwidth, transmit power, and the like that can be used in each user terminal) to each user terminal in TTI units. Note that a definition of the TTI is not limited thereto.

The TTI may be a transmission time unit of a channel-encoded data packet (transport block), a code block, a codeword, or the like, or may be a processing unit of scheduling, link adaptation, or the like. Note that when the TTI is given, a time interval (for example, the number of symbols) to which the transport block, code block, codeword, or the like is actually mapped may be shorter than the TTI.

Note that when one slot or one mini slot is referred to as a TTI, one or more TTIs (that is, one or more slots or one or more mini slots) may be the minimum time unit of scheduling. Further, the number of slots (the number of mini slots) constituting the minimum time unit of the scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time length exceeding 1 ms, and the short TTI (for example, the shortened TTI or the like) may be replaced with a TTI having a TTI length less than the TTI length of the long TTI and not less than 1 ms.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined on the basis of the numerology.

Further, the RB may include one or a plurality of symbols in the time domain, and may be one slot, one mini slot, one subframe or one TTI in length. One TTI, one subframe, and the like each may include one or a plurality of resource blocks.

Note that one or a plurality of RBs may be referred to as a physical resource block (physical RB (PRB)), a subcarrier group (SCG), a resource element group (REG), a PRB pair, an RB pair, or the like.

Further, the resource block may include one or a plurality of resource elements (REs). For example, one RE may be a radio resource area of one subcarrier and one symbol.

A bandwidth part (BWP) (which may be referred to as a partial bandwidth or the like) may represent a subset of consecutive common resource blocks (RBs) for certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or a plurality of BWPs may be configured within one carrier.

At least one of the configured BWPs may be active, and the UE does not have to assume to transmit and receive a given signal/channel outside the active BWP. Note that "cell", "carrier", or the like in the present disclosure may be replaced with "BWP".

Note that structures of the radio frame, subframe, slot, mini slot, symbol, and the like described above are merely examples. For example, configurations such as the number of subframes included in the radio frame, the number of slots per subframe or radio frame, the number of mini slots included in the slot, the number of symbols and RBs included in the slot or mini slot, the number of subcarriers included in the RB, the number of symbols in the TTI, the symbol length, the cyclic prefix (CP) length, and the like can be variously changed.

Further, the information, parameters, and the like described in the present disclosure may be represented by using absolute values, may be represented by using relative values with respect to given values, or may be represented by using other corresponding information. For example, the radio resource may be indicated by a given index.

Names used for the parameters and the like in the present disclosure are not restrictive names in any respect. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a various different technologies. For example, data, an instruction, a command, information, a signal, a bit, a symbol, a chip, and the like that can be referenced throughout the above description may be represented by a voltage, a current, an electromagnetic wave, a magnetic field or a magnetic particle, an optical field or a photon, or any combination of these.

Further, the information, signals, and the like can be output in at least one of a direction from higher layers to lower layers and a direction from lower layers to higher layers. The information, signals, and the like may be input and output via a plurality of network nodes.

The information, signals, and the like that are input and/or output may be stored in a specific location (for example, in a memory), or may be managed with a management table. The information, signals, and the like to be input and/or output can be overwritten, updated, or appended. The information, signals, and the like that are output may be deleted. The information, signals, and the like that are input may be transmitted to other apparatuses.

Notification of information may be performed not only by using the aspects/embodiments described in the present disclosure but also by using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, or the like. Further, notification of the MAC signaling may be given by using, for example, a MAC control element (MAC control element (CE)).

Further, notification of given information (for example, notification of information to the effect that "X holds") is not limited to an explicit notification, and may be made implicitly (for example, by not making the given notification, or by notification of other information).

Judging may be made in values represented by one bit (0 or 1), may be made in Boolean values that represent true or false, or may be made by comparing numerical values (for example, comparison with a given value).

Regardless of being referred to as software, firmware, middleware, a microcode, or a hardware description language, or being referred to as another name, software should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted-pair, digital subscriber line (DSL), or the like) and a radio technology (infrared rays, microwaves, or the like), at least one of the wired technology and the radio technology is included within a definition of the transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When the base station accommodates a plurality of cells, an entire coverage area of the base station can be partitioned into a plurality of smaller areas, and each smaller area can provide a communication service through a base station subsystem (for example, an indoor small base station (remote radio head (RRH))). The term "cell" or "sector" refers to a part or the whole of a coverage area of at least one of a base station and a base station subsystem that provide a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, a reception apparatus, a radio communication apparatus, or the like. Note that at least one of the base station and the mobile station may be a device mounted on a moving object, the moving object itself, or the like. The moving object may be a transportation (for example, a car, an airplane, or the like), may be an unmanned moving object (for example, a drone, an autonomous car, or the like), or may be a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication between a plurality of user terminals (which may be referred to as, for example, device-to-device (D2D), vehicle-to-everything (V2X), or the like). In this case, the user terminal 20 may have the function of the base station 10 described above. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with the base station. In this case, the base station 10 may have the function of the user terminal 20 described above.

In the present disclosure, the operation performed by the base station may be performed by an upper node thereof in some cases. In a network including one or a plurality of network nodes including the base station, it is clear that various operations performed for communication with the terminal can be performed by the base station, one or more network nodes (for example, a mobility management entity (MME), a serving-gateway (S-GW), and the like are conceivable, but not limited thereto) other than the base station, or a combination thereof.

Each aspect/embodiment described in the present disclosure may be used alone, used in combination, or switched in association with execution. Further, the order in a processing procedure, a sequence, a flowchart, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), Global System for Mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), or another appropriate radio communication method, a next generation system extended on the basis of these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "on the basis of" means both "on the basis of only" and "on the basis of at least".

Any reference to an element using designations such as "first" and "second" used in the present disclosure does not generally limit the amount or order of these elements. These designations may be used in the present disclosure only for convenience as a method for distinguishing between two or more elements. Thus, reference to the first and second elements does not mean that only two elements are employed, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, or the like.

Further, "determining" may be regarded as "determining" of receiving (for example, receiving information), transmitting (for example, transmitting information), inputting, outputting, accessing (for example, accessing data in a memory), and the like.

Further, "determining" may be regarded as "determining" of resolving, selecting, choosing, establishing, comparing, and the like. In other words, "determining" may be regarded as "determining" of some operation.

Further, "determining" may be replaced with "assuming", "expecting", "considering", and the like.

As used in the present disclosure, the terms "connected" and "coupled", or any variation of these terms mean all direct or indirect connections or couplings between two or more elements, and may include the presence of one or more intermediate elements between two elements that are "connected" or "coupled" to each other. The coupling or connection between the elements may be physical, logical or a combination of these. For example, "connection" may be replaced with "access".

In the present disclosure, when two elements are connected to each other, it is conceivable that the elements are "connected" or "coupled" to each other by using one or more electrical wires, cables, printed electrical connections, and the like, and, as some nonlimiting and non-inclusive examples, by using electromagnetic energy having wavelengths in the radio frequency, microwave, and optical (both visible and invisible) regions, or the like.

In the present disclosure, a term "A and B are different" may mean "A and B are different from each other". Note that the term may mean that "A and B are different from C". The terms such as "separated", "coupled", and the like may be interpreted as "different".

When the terms such as "include", "including", and variations of these are used in the present disclosure, these terms are intended to be inclusive, similarly to the term "comprising". Furthermore, the term "or" as used in the present disclosure is intended to be not an exclusive-OR.

In the present disclosure, for example, when translations add articles such as a, an, and the in English, the present disclosure may include that the noun that follows these articles is in the plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the scope of the invention defined on the basis of the description of claims. Thus, the description of the present disclosure is for the purpose of explaining examples and does not bring any limiting meaning to the invention according to the present disclosure.

## Claims

1. A terminal comprising:
a receiving section (220) configured to receive a Medium Access Control, MAC, control element ,CE, indicating activation of spatial relation information for an uplink control channel resource; and
a control section (210) configured to, when an uplink control channel resource group including a plurality of uplink control channel, PUCCH, resources is configured, control to apply in common the activation of the spatial relation information for the plurality of uplink control channel resources, included in the uplink control channel resource group,
wherein the MAC CE includes a field related to an uplink control channel resource ID and a field specifying a spatial relation information ID, **characterized by**, the field specifying the spatial relation information ID comprising a variable number of bits.

2. The terminal (20) according to claim 1, wherein the receiving section (220) is configured to receive, by higher layer signaling, information about the plurality of uplink control channel resources included in the uplink control channel resource group.

3. The terminal (20) according to at least one of claims 1 or 2,
wherein the control section (210) is configured to determine, based on an uplink control channel resource indicator field included in downlink control information, an uplink control channel resource used for an uplink control channel transmission, and
wherein associating a different uplink control channel resource group for respective bit values of the uplink control channel resource indicator field is supported.

4. A radio communication method for a terminal, comprising:
receiving a Medium Access Control, MAC, control element ,CE, indicating activation of spatial relation information for an uplink control channel resource; and
when an uplink control channel resource group including a plurality of uplink control channel, PUCCH, resources is configured, applying in common the activation of the spatial relation information for the plurality of uplink control channel resources, included in the uplink control channel resource group,
wherein the MAC CE includes a field related to an uplink control channel resource ID and a field specifying a spatial relation information ID, **characterized by**, the field specifying the spatial relation information ID comprising a variable number of bits.

5. A base station (10) comprising:
a transmitting section (120) configured to transmit a Medium Access Control, MAC, control element ,CE, indicating activation of spatial relation information for an uplink control channel resource; and
a control section (110) configured to, when an uplink control channel resource group including a plurality of uplink control channel, PUCCH, resources is configured, determine that the activation of the spatial relation information is applied in common for the plurality of uplink control channel resources, included in the uplink control channel resource group,
wherein the MAC CE includes a field related to an uplink control channel resource ID and a field specifying a spatial relation information ID, **characterized by**, the field specifying the spatial relation information ID comprising a variable number of bits.

6. A system comprising a terminal according to at least one of claims 1 to 3, and a base station according to claim 5.

## Patentansprüche

1. Endgerät, umfassend:
eine Empfangssektion (220), die so konfiguriert ist, dass sie ein Medienzugangssteuerungs-, MAC-, Steuerelement, CE, empfängt, das Aktivierung von Informationen zu räumlichen Beziehungen für eine Aufwärtssteuerungskanalressource angibt; und
eine Steuerungssektion (210), die so konfiguriert ist, dass sie, wenn eine Aufwärtssteuerungskanalressourcengruppe, die eine Vielzahl von Aufwärtssteuerungskanal-, PUCCH-, Ressourcen einschließt, konfiguriert ist, so steuert, dass sie gemeinsam die Aktivierung der Informationen zu räumlichen Beziehungen für die Vielzahl von Aufwärtssteuerungskanal-Ressourcen, die in der Aufwärtssteuerungskanalressourcengruppe eingeschlossen sind, anwendet,
wobei das MAC CE ein Feld einschließt, dass sich auf eine Aufwärtssteuerungskanalressourcen-ID bezieht, und ein Feld, das eine Informations-ID zu räumlichen Beziehungen spezifiziert, **dadurch gekennzeichnet, dass** das Feld, das die Informations-ID zu räumlichen Beziehungen spezifiziert, eine variable Anzahl von Bits umfasst.

2. Endgerät (20) nach Anspruch 1, wobei die Empfangssektion (220) so konfiguriert ist, dass sie durch Signalisierung höherer Schichten Informationen über die Vielzahl von Aufwärtssteuerungskanal-Ressourcen empfängt, die in der Aufwärtssteuerungskanalressourcengruppe eingeschlossen sind.

3. Endgerät (20) nach mindestens einem von Anspruch 1 oder 2,
wobei die Steuerungssektion (210) so konfiguriert ist, dass sie basierend auf einem Aufwärtssteuerungskanalressourcen-Indikatorfeld, das in den Abwärtssteuerungsinformationen enthalten ist, eine Aufwärtssteuerungskanalressource bestimmt, die für eine Aufwärtssteuerungskanalübertragung verwendet wird, und
wobei das Zuordnen einer unterschiedlichen Aufwärtssteuerungskanalressourcengruppe für jeweilige Bit-Werte des Aufwärtssteuerungskanalressourcen-Indikatorfelds unterstützt wird.

4. Funkkommunikationsverfahren für ein Endgerät, umfassend:
Empfangen eines Medienzugangssteuerungs-, MAC-, Steuerelements, CE, das Aktivierung von Informationen zu räumlichen Beziehungen für eine Aufwärtssteuerungskanalressource angibt; und
wenn eine Aufwärtssteuerungskanalressourcengruppe, die eine Vielzahl von Aufwärtssteuerungskanal-, PUCCH-, Ressourcen einschließt, konfiguriert ist, gemeinsam die Aktivierung der Informationen zu räumlichen Beziehungen für die Vielzahl von Aufwärtssteuerungskanal-Ressourcen, die in der Aufwärtssteuerungskanalressourcengruppe eingeschlossen sind, anwendet,
wobei das MAC CE ein Feld einschließt, dass sich auf eine Aufwärtssteuerungskanalressourcen-ID bezieht, und ein Feld, das eine Informations-ID zu räumlichen Beziehungen spezifiziert, **dadurch gekennzeichnet, dass** das Feld, das die Informations-ID zu räumlichen Beziehungen spezifiziert, eine variable Anzahl von Bits umfasst.

5. Basisstation (10), umfassend:
eine Übertragungssektion (120), die so konfiguriert ist, dass sie ein Medienzugangssteuerungs-, MAC-, Steuerelement, CE, überträgt, das Aktivierung von Informationen zu räumlichen Beziehungen für eine Aufwärtssteuerungskanalressource angibt; und
eine Steuerungssektion (110), die so konfiguriert ist, dass sie, wenn eine Aufwärtssteuerungskanalressourcengruppe, die eine Vielzahl von Aufwärtssteuerungskanal-, PUCCH-, Ressourcen einschließt, konfiguriert ist, bestimmt, dass die Aktivierung der Informationen zu räumlichen Beziehungen gemeinsam für die Vielzahl von Aufwärtssteuerungskanal-Ressourcen anwendet wird, die in der Aufwärtssteuerungskanalressourcengruppe eingeschlossen sind,
wobei das MAC CE ein Feld einschließt, dass sich auf eine Aufwärtssteuerungskanalressourcen-ID bezieht, und ein Feld, das eine Informations-ID zu räumlichen Beziehungen spezifiziert, **dadurch gekennzeichnet, dass** das Feld, das die Informations-ID zu räumlichen Beziehungen spezifiziert, eine variable Anzahl von Bits umfasst.

6. System, umfassend ein Endgerät nach mindestens einem der Ansprüche 1 bis 3, und eine Basisstation nach Anspruch 5.

## Revendications

1. Terminal comprenant :
une section de réception (220) configurée pour recevoir un élément de commande, CE, de commande d'accès au support, MAC, indiquant une activation d'informations de relation spatiale pour une ressource de canal de commande de liaison montante ; et
une section de commande (210) configurée pour, lorsqu'un groupe de ressources de canal de commande de liaison montante incluant une pluralité de ressources de canal de commande de liaison montante, PUCCH, est configuré, commander d'appliquer en commun l'activation des informations de relation spatiale pour la pluralité de ressources de canal de commande de liaison montante, incluses dans le groupe de ressources de canal de commande de liaison montante,
dans lequel le CE MAC inclut un champ associé à un ID de ressource de canal de commande de liaison montante et un champ spécifiant un ID d'informations de relation spatiale, **caractérisé en ce que** le champ spécifiant l'ID d'informations de relation spatiale comprend un nombre variable de bits.

2. Terminal (20) selon la revendication 1, dans lequel la section de réception (220) est configurée pour recevoir, par une signalisation de couche supérieure, des informations concernant la pluralité de ressources de canal de commande de liaison montante incluses dans le groupe de ressources de canal de commande de liaison montante.

3. Terminal (20) selon au moins l'une des revendications 1 ou 2,
dans lequel la section de commande (210) est configurée pour déterminer, sur la base d'un champ d'indicateur de ressource de canal de commande de liaison montante inclus dans des informations de commande de liaison descendante, une ressource de canal de commande de liaison montante utilisée pour une transmission de canal de commande de liaison montante, et
dans lequel l'association d'un groupe de ressources de canal de commande de liaison montante différent pour des valeurs de bit respectives du champ d'indicateur de ressource de canal de commande de liaison montante est prise en charge.

4. Procédé de communication radio pour un terminal, comprenant :
le fait de recevoir un élément de commande, CE, de commande d'accès au support, MAC, indiquant une activation d'informations de relation spatiale pour une ressource de canal de commande de liaison montante ; et
lorsqu'un groupe de ressources de canal de commande de liaison montante incluant une pluralité de ressources de canal de commande de liaison montante, PUCCH, est configuré, le fait d'appliquer en commun l'activation des informations de relation spatiale pour la pluralité de ressources de canal de commande de liaison montante, incluses dans le groupe de ressources de canal de commande de liaison montante,
dans lequel le CE MAC inclut un champ associé à un ID de ressource de canal de commande de liaison montante et un champ spécifiant un ID d'informations de relation spatiale, **caractérisé en ce que** le champ spécifiant l'ID d'informations de relation spatiale comprend un nombre variable de bits.

5. Station de base (10) comprenant :
une section de transmission (120) configurée pour transmettre un élément de commande, CE, de commande d'accès au support, MAC, indiquant une activation d'informations de relation spatiale pour une ressource de canal de commande de liaison montante ; et
une section de commande (110) configurée pour, lorsqu'un groupe de ressources de canal de commande de liaison montante incluant une pluralité de ressources de canal de commande de liaison montante, PUCCH, est configuré, déterminer que l'activation des informations de relation spatiale est appliquée en commun pour la pluralité de ressources de canal de commande de liaison montante, incluses dans le groupe de ressources de canal de commande de liaison montante,
dans laquelle le CE MAC inclut un champ associé à un ID de ressource de canal de commande de liaison montante et un champ spécifiant un ID d'informations de relation spatiale, **caractérisé en ce que** le champ spécifiant l'ID d'informations de relation spatiale comprend un nombre variable de bits.

6. Système comprenant un terminal selon au moins l'une des revendications 1 à 3, et une station de base selon la revendication 5.
